# EUROPÄISCHE PATENTANMELDUNG

(11) **EP 2 363 214 A1**
(43) Veröffentlichungstag der Anmeldung: **07.09.2011**
(21) Anmeldenummer: 11001299.4
(22) Anmeldetag: 17.02.2011
(51) Int. Cl.: B21C 37/08, B23K 26/26

(54) **Verfahren zur Herstellung eines geschweissten Hohlprofils sowie geschweisstes Hohlprofil**

(30) Priorität: 02.03.2010 DE 102010010008
(71) Anmelder: Ferro Umformtechnik GmbH & Co. KG, 48703 Stadtlohn (DE)
(72) Erfinder: Dünne, Heinrich, 48683 Ahaus - Graes (DE)
(74) Vertreter: Patentanwälte Thömen & Körner

(57) **Zusammenfassung**

Die Erfindung bezieht sich auf ein Verfahren zur Herstellung eines geschweißten Hohlprofils sowie auf ein geschweißtes Hohlprofil, wobei
zur Herstellung des geschweißten Hohlprofils entweder
a1) ein ebener Materialstreifen, insbesondere Blechstreifen, derart gekantet wird, dass die Längskanten des Materialstreifens stumpf aneinander stoßen und eine I-Naht (16) bilden, oder
a2) eine obere Profilhalbschale (20) mit ihren Längskanten auf einer unteren Profilhalbschale (22) abgelegt wird, wobei die inneren Längskanten der oberen und der unteren Profilhalbschalen stumpf aneinander stoßen und jeweils eine I-Naht bilden, wobei
b) die jeweilige Naht anschließend lasergeschweißt oder laserhybridgeschweißt wird.

## Beschreibung

Die Erfindung betrifft ein Verfahren zur Herstellung eines geschweißten Hohlprofils sowie ein geschweißtes Hohlprofil.

Die WO 2009 033 443 A1 offenbart bereits ein Verfahren zum Längsnahtschweißen von Hohlprofilen für Kranausleger.

Im Mobilkransektor haben sich genormte Vergütungsstähle mit Streckgrenzen von 690 MPa bis 1300 MPa durchgesetzt und etabliert. Die Folge ist eine Reduzierung des Konstruktionseigengewichtes, welche sich sehr günstig auf die Nutz- und Achslasten von Mobilkranen auswirkt. Längsschweißnähte sind dabei in Bereichen geringer Beanspruchung angeordnet, so dass ihre Anordnung nachteilig nicht frei wählbar ist.

Zur Herstellung der Längsschweißnähte wird bekanntermaßen das so genannte MAG-Schweißen (Metallschweißen mit aktiven Gasen) angewandt, welches nachteilig einen mehrlagigen Nahtaufbau erfordert. Dies führt nachteilig zu sehr hohen Eigenspannungen im Bauteil. Diese Eigenspannungen, insbesondere Längs-, Quer- und Winkelspannungen, können das Profil verformen und zu Verdrillungen führen, die durch aufwendiges mechanisches und/oder thermisches Richten minimiert werden müssen. Ein völliges Beseitigen der Spannungen im Profil ist jedoch kaum möglich. Im späteren Einsatz des Bauteils können diese verbliebenen Spannungen zu Problemen in der Funktionalität führen.

Nachteilig ist außerdem, dass Anlasseffekte eine Entfestigung im Schweißgut verursachen und zudem die Gefahr von Bindefehlern und nichtmetallischen Einschlüssen sowie eine geringe Produktivität durch den Einsatz des MAG-Schweißens bestehen. Schließlich ist nachteilig, dass die Herstellung dieser Längsschweißnähte einen erhöhten Aufwand an Nahtvorbereitungen, Bauteilfixierungen und nachfolgenden Richtarbeiten erfordert.

Gemäß WO 2009 033 443 A1 wird versucht, diese Nachteile dadurch zu vermeiden, dass zwei Profilhalbschalen mit unterschiedlichen Blechstärken aufeinander gelegt, ausgerichtet, anschließend geheftet und schließlich an ihren äußeren Längskanten durch ein Plasma-Stichlochschweißen und ein nachfolgendes MAG-Schweißen mit zwei Längsschweißnähten zusammengefügt werden.

Das Fixieren der beiden Halbschalen zueinander ist hierbei nachteilig sehr aufwendig und erfordert gegebenenfalls zusätzliche Vorrichtungen.

Nachteilig ist auch, dass beim Plasma-Stichlochschweißen Blechstärken vom max. 8 mm limitierend wirken. Zudem sind nachteilig eine Nahtvorbereitung und die Zufuhr eines Zusatzwerkstoffs erforderlich. Weiterhin ist die Herstellung dieser zwei Längsschweißnähte zur Ausbildung eines Hohlprofils sehr zeit-, kosten- und energieintensiv.

Nachteilig ist weiterhin, dass an den Schweißnahtkanten je nach Materialstärke oftmals sehr aufwendig Fasen hergestellt werden. Zudem ist nachteilig, dass die Schweißnaht oftmals durch eine so genannte Schweißbadsicherung vor dem Einfallen des Schmelzbades geschützt werden muss. Bei einer Schweißbadsicherung handelt es sich um einen Blechstreifen, oder um eine wärmeableitende Schiene, beispielsweise aus Kupfer, oder um eine wärmebeständige Schiene, beispielsweise aus Keramik, die an das zu schweißende Bauteil angebracht wird, um das Durchfallen des Schweißgutes zu verhindern.

Insgesamt führen die genannten Verfahren zur Herstellung eines geschweißten Hohlprofils zu einer geringen Produktivität und zu einer geminderten Funktionssicherheit.

Der Erfindung liegt die Aufgabe zugrunde, die Nachteile des Standes der Technik zu vermieden und ein Verfahren zur Herstellung eines geschweißten Hohlprofils sowie ein geschweißtes Hohlprofil selbst derart zu verbessern, dass das geschweißte Hohlprofil in seiner Herstellung günstiger und hinsichtlich seiner Funktion in einer späteren Anwendung sicherer wird. Zudem soll das in einer späteren Anwendung häufig schwingend belastete, geschweißte Hohlprofil leistungsfähiger gestaltet werden. Weiterhin soll das Verfahren zur Herstellung des geschweißten Hohlprofils optimiert werden.

Gelöst wird diese Aufgabe bei einem Verfahren zur Herstellung eines geschweißten Hohlprofils erfindungsgemäß dadurch, dass entweder
a1) ein ebener Materialstreifen, insbesondere Blechstreifen, derart gekantet wird, dass die Längskanten des Materialstreifens stumpf aneinander stoßen und eine I-Naht bilden, oder
a2) eine obere Profilhalbschale mit ihren Längskanten auf einer unteren Profilhalbschale abgelegt wird, wobei die inneren Längskanten der oberen und der unteren Profilhalbschalen stumpf aneinander stoßen und jeweils eine I-Naht bilden, wobei
b) die jeweilige Naht anschließend lasergeschweißt oder laserhybridgeschweißt wird.

Vorteilhaft gemäß Variante a1) in Verbindung mit b) ist hierbei, dass das Profil nicht aus zwei Halbschalen, sondern bereits als komplettes Profil durch polygonales Kanten hergestellt wird. Dabei entsteht nur eine Längsschweißnaht. Vorteilhaft gemäß Variante a2) in Verbindung mit b) ist hierbei, dass die zwei Profilhalbschalen durch Laserschweißen oder Laserhybridschweißen miteinander verbunden werden, wodurch eine höhere Produktivität erreicht und ein in der Herstellung günstigeres und hinsichtlich der Funktion in einer späteren Anwendung sichereres Hohlprofil erhalten wird.

Vorteilhaft kann jede Profilhalbschale zuvor durch Kanten aus einem ebenen Materialstreifen hergestellt sein.

Vorteilhaft kann der ebene Materialstreifen vor dem Kanten vorzugsweise durch Laserschneiden auf ein vorgegebenes Fertigmaß geschnitten werden, wobei besonders bevorzugt bereits Konturen, insbesondere Montagelöcher, Anfangs-und/oder Endkonturen, angefertigt werden können.

Die Längsschweißnaht kann konstruktiv so gelegt werden, dass sie möglichst geringe Auswirkungen auf die Funktion des Hohlprofils in einer späteren Anwendung oder auf das Aussehen des Hohlprofils hat. So kann die Längsschweißnaht an eine Längskante oder innerhalb einer Längsseite des Hohlprofils verlaufen.

Die beim Laserschweißen bzw. Laserhybridschweißen vorgesehenen hohen Energiedichten auf kleinster Fläche ermöglichen das Verschweißen von unterschiedlichen Materialstärken mit einer Schweißlage, wobei die Einschweißtiefe bzw. die Materialstärke abhängig von der vorhandenen Laserleistung ist. Es kann hierbei von Vorteil sein, wenn die Einschweißtiefe bis 20 mm, vorzugsweise 1 mm bis 20 mm, besonders bevorzugt 2 mm bis 20 mm, ganz besonders bevorzugt 3 mm bis 20 mm und noch bevorzugter 4 mm bis 20 mm beträgt. Für gewisse Anwendungsfälle kann es zudem von Vorteil sein, wenn die Einschweißtiefe 9 mm bis 20 mm, besonders bevorzugt 9 mm bis 12 mm beträgt.

Eine zusätzliche Schweißnahtvorbereitung ist beim Einsatz der genannten Schweißverfahren vorteilhaft nicht erforderlich. Eine Schweißbadsicherung kann bei dem erfindungsgemäßen Verfahren ebenfalls entfallen. Vorteilhaft wird durch das erfindungsgemäße Verfahren nur eine Schweißnaht von wenigen Millimetern, vorzugsweise bis maximal 3 mm, besonders bevorzugt bis maximal 2 mm Breite erreicht, und gleichzeitig eine hohe, vorzugsweise durchgängige Einschweißtiefe bewirkt.

Das zu schweißende Bauteil wird im Bereich um die Schweißnaht deutlich weniger erwärmt. Spannungen und daraus resultierende Verformungen werden kaum festgestellt. Ein aufwendiges Richten der Bauteile entfällt damit ganz. Weiterhin kann nachgewiesen werden, dass lasergeschweißte bzw. laserhybridgeschweißte Nähte den Eigenschaften des Grundwerkstoffes entsprechen. Ein derartig hergestelltes Hohlprofil zeichnet sich durch eine hohe Funktionalität und Einsatzsicherheit aus. Beim Laserschweißen ist die Längsschweißnaht als I-Naht ausgebildet. Dies ist quasi auch beim Laserhybridschweißen der Fall, wobei die I-Naht hierbei leicht in eine V-Naht mit einem Öffnungswinkel von bis zu 15°, vorzugsweise von bis zu 10°, besonders bevorzugt von bis zu 6°, übergeht. Im Rahmen der Erfindung gilt dies für das Laserhybridschweißen aber immer noch als I-Naht.

Es kann von Vorteil sein, wenn die untere Profilhalbschale eine von der oberen Profilhalbschale unterschiedliche Material-, insbesondere Blechstärke aufweist und/oder die untere Profilhalbschale eine von der oberen Profilhalbschale unterschiedliche Material-, insbesondere Blechgüte bzw. einen unterschiedliche Grundwerkstoff aufweist.

Für bestimmte Einsatzzwecke kann es von Vorteil sein, wenn der Grundwerkstoff zur Bildung des Hohlprofils oder einer Profilhalbschale S690 QL (Werkstoffnummer 1.8928) ist. Für gewisse Einsatzzwecke kann es von Vorteil sein, wenn der Grundwerkstoff zur Bildung des Hohlprofils oder einer Profilhalbschale S960 QL (Werkstoffnummer 1.8933) ist. Für gewisse andere Einsatzzwecke kann es von Vorteil sein, wenn der Grundwerkstoff zur Bildung des Hohlprofils oder einer Profilhalbschale S1100 QL (Werkstoffnummer 1.8942) ist. Für wieder andere gewisse Einsatzzwecke kann es von Vorteil sein, wenn der Grundwerkstoff zur Bildung des Hohlprofils oder einer Profilhalbschale S1300 QL (Werksnorm der SSAB AB) ist Für bestimmte Anwendungen kann es von Vorteil sein, wenn der Grundwerkstoff zur Bildung des Hohlprofils oder einer Profilhalbschale ein Baustahl des Typs S235JR (Werkstoffnummer 1.0038) ist. Für gewisse Anwendungen kann es von Vorteil sein, wenn der Grundwerkstoff zur Bildung des Hohlprofils oder einer Profilhalbschale ein Baustahl des Typs S355J2 (Werkstoffnummer 1.0577) ist. Für gewisse andere Anwendungen kann es von Vorteil sein, wenn der Grundwerkstoff zur Bildung des Hohlprofils oder einer Profilhalbschale ein Baustahl des Typs S355MC (Werkstoffnummer 1.0976) ist. Für ganz andere Anwendungen kann es von Vorteil sein, wenn der Grundwerkstoff zur Bildung des Hohlprofils oder einer Profilhalbschale ein Baustahl des Typs S380 TM ist

Für bestimmte Einsatzfälle kann es von Vorteil sein, wenn der Grundwerkstoff zur Bildung des Hohlprofils oder einer Profilhalbschale S700MC (Werkstoffnummer 1.8974) ist. Für gewisse Einsatzfälle kann es von Vorteil sein, wenn der Grundwerkstoff zur Bildung des Hohlprofils oder einer Profilhalbschale S890 QL (Werkstoffnummer 1.8983) ist.

Für bestimmte Zwecke kann es von Vorteil sein, wenn der Grundwerkstoff zur Bildung des Hohlprofils oder einer Profilhalbschale ein verschleißfester Stahl des Typs HB 400 (Werkstoffnummer 1.8714) ist. Für gewisse Zwecke kann es von Vorteil sein, wenn der Grundwerkstoff zur Bildung des Hohlprofils oder einer Profilhalbschale ein verschleißfester Stahl des Typs HB 450 (Werkstoffnummer 1.8722) ist. Für gewisse andere Zwecke kann es von Vorteil sein, wenn der Grundwerkstoff zur Bildung des Hohlprofils oder einer Profilhalbschale ein verschleißfester Stahl des Typs HB500 (Werkstoffnummer 1.8734) ist.

Für bestimmte Fälle kann es von Vorteil sein, wenn der Grundwerkstoff zur Bildung des Hohlprofils oder einer Profilhalbschale ein unter der Bezeichnung DP 550 (Werkstoffnummer 1.0931) bekannter Dualphasenstahl ist. Für bestimmte andere Fälle kann es von Vorteil sein, wenn der Grundwerkstoff zur Bildung des Hohlprofils oder einer Profilhalbschale ein unter der Bezeichnung DP 600 (Werkstoffnummer 1.0936) bekannter Dualphasenstahl ist. Für ganz andere bestimmte Fälle kann es von Vorteil sein, wenn der Grundwerkstoff zur Bildung des Hohlprofils oder einer Profilhalbschale ein unter der Bezeichnung DP 700 (Werknorm der SSAB AB) bekannter Dualphasenstahl ist. Für gewisse Fälle kann es von Vorteil sein, wenn der Grundwerkstoff zur Bildung des Hohlprofils oder einer Profilhalbschale ein unter der Bezeichnung DP 900 bzw. Docol 900M (Werksnorm der SSAB AB) bekannter Dualphasenstahl ist. Für gewisse andere Fälle kann es von Vorteil sein, wenn der Grundwerkstoff zur Bildung des Hohlprofils oder einer Profilhalbschale ein unter der Bezeichnung DP 1200 bzw. Docol 1200M (Werksnorm der SSAB AB) bekannter Dualphasenstahl ist. Für wieder andere Fälle kann es von Vorteil sein, wenn der Grundwerkstoff zur Bildung des Hohlprofils oder einer Profilhalbschale ein unter der Bezeichnung DP 1400 bzw. Docol 1400M (Werksnorm der SSAB AB) bekannter Dualphasenstahl ist. Für wieder ganz andere Fälle kann es von Vorteil sein, wenn der Grundwerkstoff zur Bildung des Hohlprofils oder einer Profilhalbschale ein unter der Bezeichnung DP 1500 bzw. Docol 1500M (Werksnorm der SSAB AB) bekannter Dualphasenstahl ist.

Es kann vorteilhaft sein, wenn die I-Naht mit einer Lage durchgeschweißt wird.

Es kann von Vorteil sein, wenn die Längskanten vor dem Laserschweißen oder Laserhybridschweißen derart angefast werden, dass diese nach dem Kanten des Materialstreifens stumpf aneinander stoßen und eine I-Naht bilden.

Zweckmäßigerweise können die Längskanten derart stumpf aneinander stoßen, dass ein Fügespalt vorzugsweise von weniger als 0,1 mm, besonders bevorzugt von weniger als 0,05 mm, ausgebildet wird.

Es kann zweckmäßig sein, wenn die Längskanten derart stumpf aneinander stoßen, dass ein Versatz der Längskanten zueinander vorzugsweise von weniger als 0,1 mm, besonders bevorzugt von weniger als 0,05 mm, ausgebildet wird.

Für bestimmte Einsatzzwecke kann es vorteilhaft sein, wenn gepulst geschweißt wird. Für gewisse, bevorzugte Einsatzzwecke kann es vorteilhaft sein, wenn in Form eines Dauerstrichs geschweißt wird.

Vorteilhaft kann die Schweißgeschwindigkeit in Abhängigkeit von der Einschweißtiefe vorzugsweise 0,4 bis 25 m/min, besonders bevorzugt 1 bis 15 m/min, betragen.

Es kann zweckmäßig sein, wenn das Schweißen von der Außenseite des Hohlprofils aus erfolgt.

Es kann vorteilhaft sein, wenn der ebene Materialstreifen, insbesondere Blechstreifen, polygonal, vorzugsweise drei-, vier-, fünf- oder sechs-, besonders bevorzugt sieben-, acht-, neun-, zehn- oder zwölf-, oder noch bevorzugter vierzehneckig gekantet wird. Für gewisse Einsatzzwecke kann es aber auch vorteilhaft sein, wenn der ebene Materialstreifen, insbesondere Blechstreifen, halboval zur Bildung einer Profilhalbschale oder oval zur Bildung eines Hohlprofils gekantet wird.

Die Erfindung betrifft weiterhin ein geschweißtes Hohlprofil, welches nach einem der Ansprüche 1 bis 10 hergestellt wird, wobei das Hohlprofil ein polygonal gekantetes Hohlprofil mit einem Durchmesser vorzugsweise von 50 mm bis 2500 mm, besonders bevorzugt von 150 mm bis 2000 mm, ganz besonders bevorzugt von 200 mm bis 1700 mm, und noch bevorzugter von 400 mm bis 1200 mm beträgt. Für einige Anwendungsfälle kann es von Vorteil sein, wenn der Durchmesser des Hohlprofils 200 mm bis 1200 mm beträgt. Für andere Anwendungsfälle kann es von Vorteil sein, wenn der Durchmesser des Hohlprofils 400 mm bis 1700 mm beträgt.

Für bestimmte Einsatzzwecke kann es zweckmäßig sein, wenn das polygonal gekantete Hohlprofil nach dem Schweißen einen Querschnitt in Form eines Dreiecks aufweist. Für gewisse Einsatzzwecke kann es zweckmäßig sein, wenn das polygonal gekantete Hohlprofil nach dem Schweißen einen Querschnitt in Form eines Vierecks aufweist. Für andere Einsatzzwecke kann es zweckmäßig sein, wenn das polygonal gekantete Hohlprofil nach dem Schweißen einen Querschnitt in Form eines Sechsecks aufweist. Für wieder andere Einsatzzwecke kann es zweckmäßig sein, wenn das polygonal gekantete Hohlprofil nach dem Schweißen einen Querschnitt in Form eines Achtecks aufweist. Für ganz andere Einsatzzwecke kann es zweckmäßig sein, wenn das polygonal gekantete Hohlprofil nach dem Schweißen einen Querschnitt in Form eines Zehnecks aufweist. Für wieder ganz andere Einsatzzwecke kann es zweckmäßig sein, wenn das polygonal gekantete Hohlprofil nach dem Schweißen einen Querschnitt in Form eines Zwölfecks aufweist. Für völlig andere Einsatzzwecke kann es zweckmäßig sein, wenn das polygonal gekantete Hohlprofil nach dem Schweißen einen Querschnitt in Form eines Fünfzehnecks aufweist. Für wieder völlig andere Einsatzzwecke kann es zweckmäßig sein, wenn das polygonal gekantete Hohlprofil derart mehrfach gekantet ist, dass es nach dem Schweißen einen quasi runden Querschnitt aufweist.

Es kann für bestimmte Zwecke vorteilhaft sein, wenn die Längsschweißnaht eine Längskante des Hohlprofils bildet. Es kann für gewisse Zwecke vorteilhaft sein, wenn die Längsschweißnaht innerhalb einer Längsseite des Hohlprofils verläuft.

Die Erfindung betrifft schließlich die Verwendung eines geschweißten Hohlprofils, insbesondere nach einem der Ansprüche 11 bis 16, oder eines nach einem Verfahren der Ansprüche 1 bis 10 hergestellten Hohlprofils in teleskopartig verstellbaren Einrichtungen, bei denen mehrere dieser Hohlprofile unterschiedlicher Dimension ineinander verschiebbar sind. Diese teleskopartig verstellbaren Einrichtungen werden üblicherweise benutzt, um Lasten und/oder Personen zu heben, oder dienen als Abstützung, um die Standsicherheit von Maschinen sicherzustellen. Es kann vorteilhaft sein, wenn die vorgenannten Hohlprofile im Brückenbau, für Beschilderungsbauten bzw. Verkehrsleitsysteme an Autobahnen, für Windkraftanlagen oder für Bohrplattformen verwendet werden.

Nachfolgend wird die Erfindung anhand von Ausführungsbeispielen erläutert, die in der Zeichnung dargestellt sind. In dieser zeigen:
- Fig. 1 - 3: erfindungsgemäß geschweißte Hohlprofile im Querschnitt,
- Fig. 4 - 5: erfindungsgemäße Hohlprofile im Querschnitt ohne und mit angefaster Längskante im noch ungeschweißten Zustand,
- Fig. 6: erfindungsgemäß vorgesehene Anordnungen a) bis d) der stumpf aneinander stoßenden Längskanten im Querschnitt und
- Fig. 7: erfindungsgemäß vorgesehene Anordnungen a) bis h) von Profilhalbschalen im Querschnitt mit unterschiedlicher Materialstärke a) bis d) und gleicher Materialstärke e) bis h).

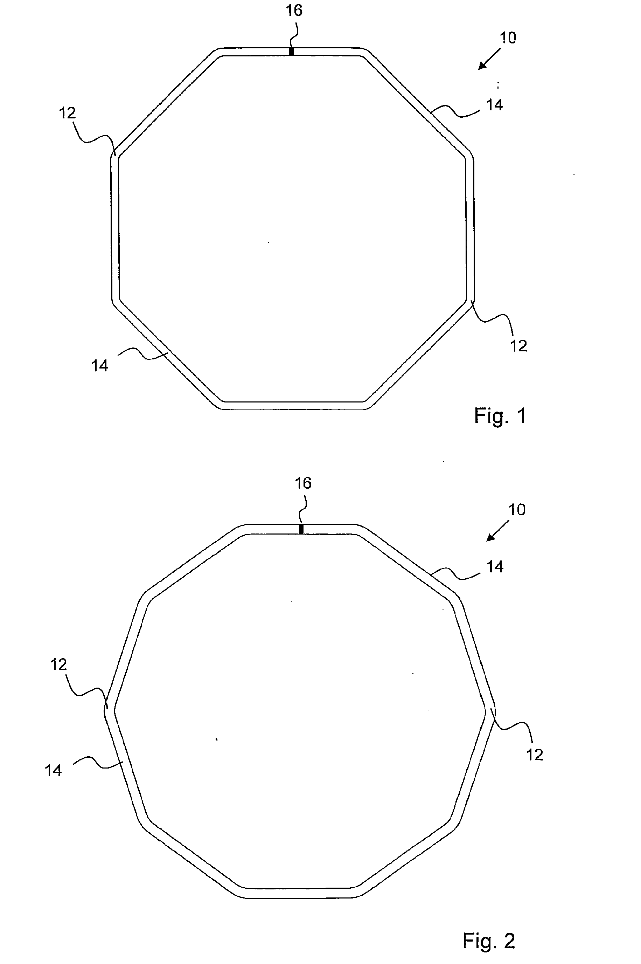

Werden in den Fig. 1 bis 7 gleiche Bezugsziffern verwendet, so bezeichnen diese gleiche Teile, so dass zwecks Vermeidung von Wiederholungen nicht bei jeder Figurenbeschreibung auf ein bereits beschriebenes Bauteil erneut eingegangen werden muss.

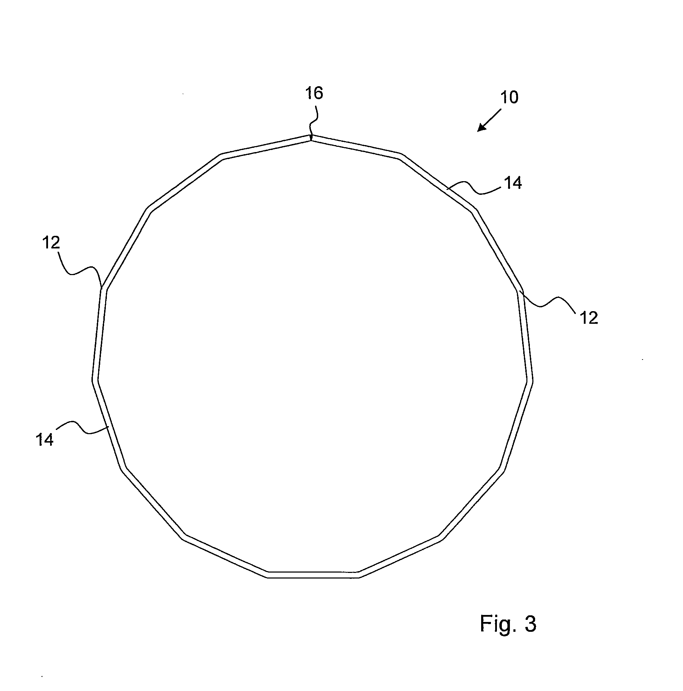

Fig. 1 zeigt ein erfindungsgemäß hergestelltes Hohlprofil 10 im Querschnitt, welches aus einem ebenen Blechstreifen 8-fach gekantet wurde und entsprechend acht Längsecken 12 sowie acht Längsseiten 14 aufweist. Die Kantung erfolgte hierbei so, dass die Längskanten des zuvor ebenen Blechstreifens stumpf aneinanderstoßen und eine I-Naht bilden, welche dann lasergeschweißt wird. Die Längsschweißnaht 16 ist hierbei äußerst schmal ausgebildet und verläuft innerhalb einer Längsseite 14 des Hohlprofils 10. Das in Fig. 2 im Querschnitt dargestellte Hohlprofil 10 entspricht im Wesentlichen dem Hohlprofil 10 gemäß Fig. 1, ist jedoch 10-fach gekantet. Fig. 3 zeigt ein 14-fach gekantetes Hohlprofil im Querschnitt, wobei hier gegenüber den in den Fig. 1 und 2 dargestellten Hohlprofilen 10 die Schweißnaht nicht in einer Längsseite 14, sondern in einer Längsecke 12 des Hohlprofils 10 verläuft bzw. diese bildet.

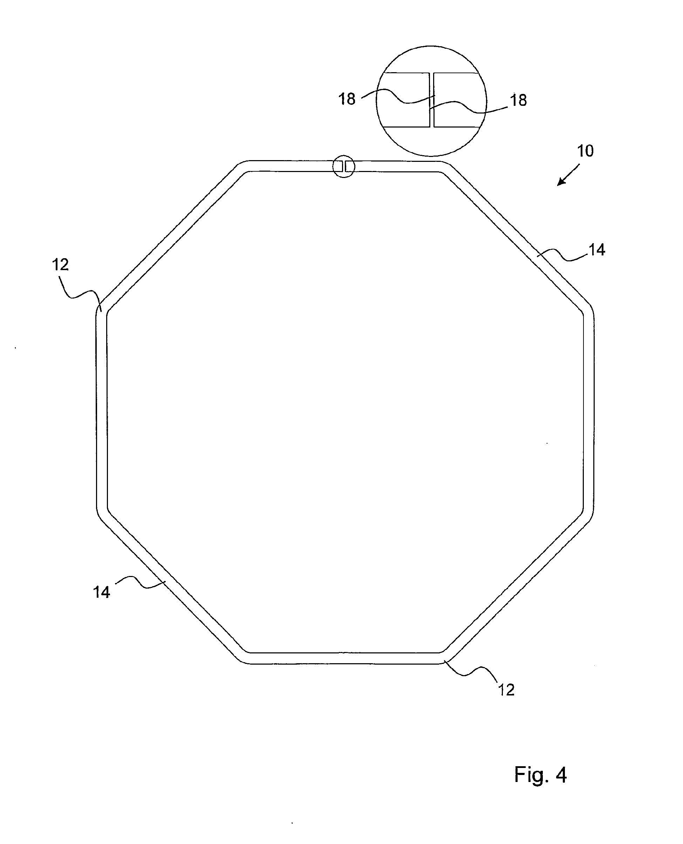

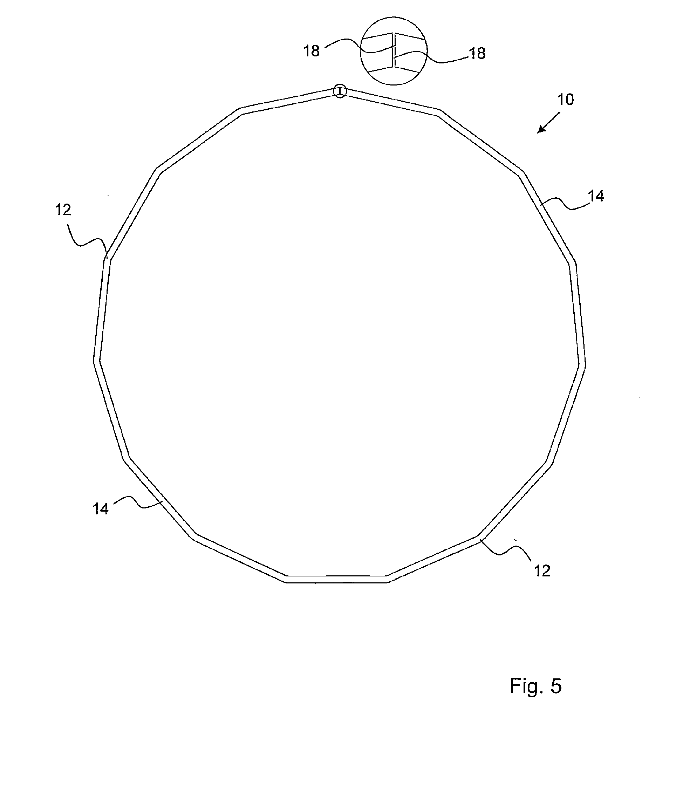

Fig. 4 zeigt im Querschnitt das in Fig. 1 dargestellte Hohlprofil 10 im noch ungeschweißten Zustand. Der Teilausschnitt in Fig. 4 zeigt hierbei die stumpf aneinanderstoßenden Längskanten 18, welche zur Bildung der I-Naht parallel zueinander verlaufen. Die Längskanten 18 sind hierbei nicht angefast. Fig. 5 zeigt im Querschnitt das in Fig. 3 dargestellte Hohlprofil 10 im noch ungeschweißten Zustand, wobei erfindungsgemäß die Längskanten 18 - wie der Teilausschnitt in Fig. 5 verdeutlicht - je eine Fase aufweisen, derart, dass die stumpf aneinanderstoßenden Längskanten 18 zur Bildung der I-Naht parallel zueinander verlaufen.

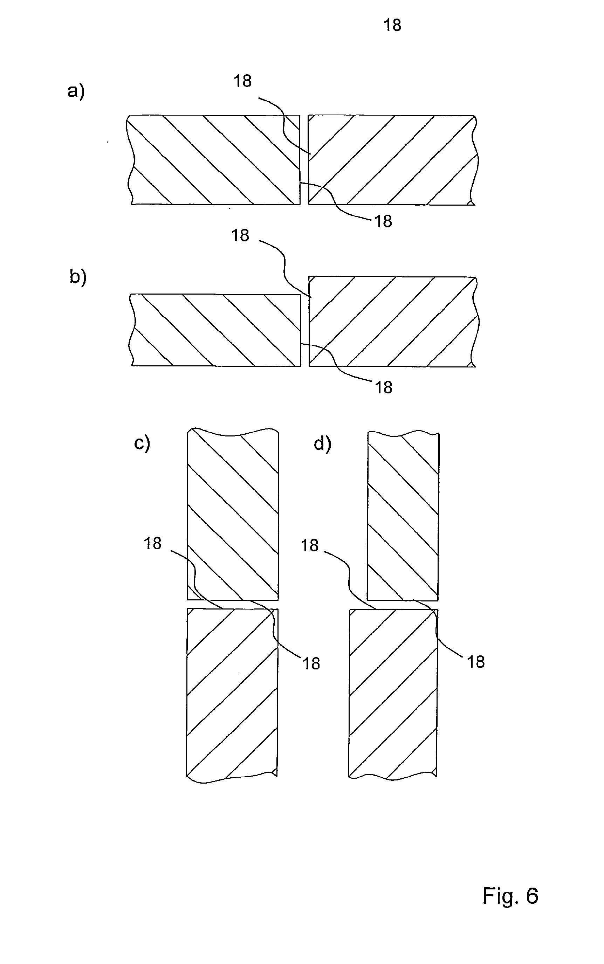

Fig. 6 zeigt mögliche Anordnungen der stumpf aneinander stoßenden Längskanten 18 eines Materialstreifens oder zweier Profilhalbschalen. In a) und c) stoßen zwei Längskanten 18 gleicher Materialstärke stumpf aneinander, in b) und d) dagegen mit unterschiedlicher Materialstärke. Das Schweißen kann dabei senkrecht oder horizontal erfolgen.

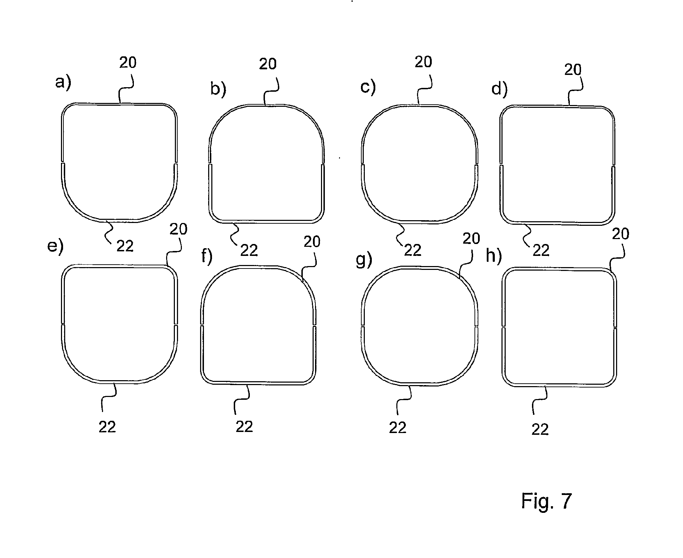

In Fig. 7 sind im Querschnitt verschiedene Anordnungen a) bis h) von Profilhalbschalen 20, 22 mit unterschiedlicher Materialstärke a) bis d) und gleicher Materialstärke e) bis h) dargestellt. Die Anordnungen a) bis d) bzw. e) bis h) zeigen unterschiedliche Querschnittsprofile, wobei die Möglichkeit besteht, je nach Einsatzzweck, eine oder beide Halbprofilschalen 20, 22 halbovalförmig und/oder eine oder beide Halbprofilschalen 20, 22 eckig zu kanten. Fig. 7 a) bis h) zeigt nur eine Auswahl möglicher Kombinationsmöglichkeiten.

### Bezugszeichenliste

### (ist Teil der Beschreibung)

- 10: Hohlprofil
- 12: Längsecke
- 14: Längsseite
- 16: Längsschweißnaht
- 18: Längskante
- 20: Halbprofilschale
- 22: Halbprofilschale

## Patentansprüche

1. Verfahren zur Herstellung eines geschweißten Hohlprofils, **dadurch gekennzeichnet, dass** entweder
a1) ein ebener Materialstreifen, insbesondere Blechstreifen, derart gekantet wird, dass die Längskanten des Materialstreifens stumpf aneinander stoßen und eine I-Naht bilden, oder
a2) eine obere Profilhalbschale mit ihren Längskanten auf einer unteren Profilhalbschale abgelegt wird, wobei die inneren Längskanten der oberen und der unteren Profilhalbschalen stumpf aneinander stoßen und jeweils eine I-Naht bilden, wobei
b) die jeweilige Naht anschließend lasergeschweißt oder laserhybridgeschweißt wird.

2. Verfahren nach Anspruch 1, **dadurch gekennzeichnet, dass** die I-Naht in einer Lage durchgeschweißt wird.

3. Verfahren nach Anspruch 1 oder 2, **dadurch gekennzeichnet, dass** die untere Profilhalbschale eine von der oberen Profilhalbschale unterschiedliche Material-, insbesondere Blechstärke aufweist und/oder die untere Profilhalbschale eine von der oberen Profilhalbschale unterschiedliche Material-, insbesondere Blechgüte aufweist.

4. Verfahren nach einem der Ansprüche 1 bis 3, **dadurch gekennzeichnet, dass** die Längskanten vor dem Laserschweißen oder Laserhybridschweißen derart angefast werden, dass diese nach dem Kanten des Materialstreifens stumpf aneinander stoßen und eine I-Naht bilden.

5. Verfahren nach einem der Ansprüche 1 bis 4, **dadurch gekennzeichnet, dass** die Längskanten derart stumpf aneinander stoßen, dass ein Fügespalt vorzugsweise von weniger als 0,1 mm, besonders bevorzugt von weniger als 0,05 mm, ausgebildet wird.

6. Verfahren nach einem der Ansprüche 1 bis 5, **dadurch gekennzeichnet, dass** die Längskanten derart stumpf aneinander stoßen, dass ein Versatz der Längskanten zueinander vorzugsweise von weniger als 0,1 mm, besonders bevorzugt von weniger als 0,05 mm, ausgebildet wird.

7. Verfahren nach einem der Ansprüche 1 bis 6, **dadurch gekennzeichnet, dass** gepulst oder vorzugsweise in Form eines Dauerstrichs geschweißt wird.

8. Verfahren nach einem der Ansprüche 1 bis 7, **dadurch gekennzeichnet, dass** die Schweißgeschwindigkeit in Abhängigkeit von der Einschweißtiefe vorzugsweise 0,4 bis 25 m/min, besonders bevorzugt 1 bis 15 m/min beträgt.

9. Verfahren nach einem der Ansprüche 1 bis 8, **dadurch gekennzeichnet, dass** das Schweißen von der Außenseite des Hohlprofils aus erfolgt.

10. Verfahren nach einem der Ansprüche 1 bis 9, **dadurch gekennzeichnet, dass** der ebene Materialstreifen, insbesondere Blechstreifen, polygonal, vorzugsweise drei-, vier-, fünf- oder sechs-, besonders bevorzugt sieben-, acht-, neun-, zehn- oder zwölf-, oder noch bevorzugter vierzehneckig gekantet wird, oder dass der ebene Materialstreifen, insbesondere Blechstreifen, halboval zur Bildung einer Profilhalbschale oder oval zur Bildung eines ovalförmigen Hohlprofils gekantet wird.

11. Geschweißtes Hohlprofil, hergestellt insbesondere nach einem der Ansprüche 1 bis 10, **dadurch gekennzeichnet, dass** das Hohlprofil ein polygonal gekantetes Hohlprofil ist und die Einschweißtiefe bzw. die Materialstärke abhängig von der vorhandenen Laserleistung ist, wobei die Einschweißtiefe vorzugsweise bis 20 mm, besonders bevorzugt 1 mm bis 20 mm, ganz besonders bevorzugt 2 mm bis 20 mm, noch bevorzugter 3 mm bis 20 mm und noch mehr bevorzugter 4 mm bis 20 mm beträgt.

12. Geschweißtes Hohlprofil nach Anspruch 11, **dadurch gekennzeichnet, dass** die Einschweißtiefe 9 mm bis 20 mm, besonders bevorzugt 9 mm bis 12 mm beträgt.

13. Geschweißtes Hohlprofil nach Anspruch 11 oder 12, **dadurch gekennzeichnet, dass** das Hohlprofil ein polygonal gekantetes Hohlprofil ist und einen Durchmesser vorzugsweise von 50 mm bis 2500 mm, besonders bevorzugt von 150 mm bis 2000 mm, ganz besonders bevorzugt von 200 mm bis 1700 mm, und noch bevorzugter von 400 mm bis 1200 mm aufweist.

14. Geschweißtes Hohlprofil nach Anspruch 13, **dadurch gekennzeichnet, dass** der Durchmesser des Hohlprofils 200 mm bis 1200 mm oder 400 mm bis 1700 mm beträgt.

15. Geschweißtes Hohlprofil nach einem der Ansprüche 11 bis14, **dadurch gekennzeichnet, dass** polygonal gekantetes Hohlprofil einen Querschnitt in Form eines Drei-, Vier-, Sechs-, Acht-, Zehn-, Zwölf- oder Fünfzehnecks aufweist oder derart mehrfach gekantet ist, dass es nach dem Schweißen einen quasi runden Querschnitt aufweist.

16. Geschweißtes Hohlprofil nach einem der Ansprüche 11 bis 15, **dadurch gekennzeichnet, dass** die Längsnaht in einer Längsecke des Hohlprofils oder in einer Längsseite des Hohlprofils verläuft.

17. Verwendung eines geschweißten Hohlprofils, insbesondere nach einem der Ansprüche 11 bis 16, oder eines insbesondere nach einem Verfahren gemäß der Ansprüche 1 bis 10 hergestellten Hohlprofils in teleskopierbaren Einrichtungen mit mehreren ineinander verschiebbaren Hohlprofilen unterschiedlicher Dimension, insbesondere zum Heben von Lasten und/oder Personen oder zur Abstützung, um die Standsicherheit von Maschinen sicherzustellen. oder im Brückenbau, für Beschilderungsbauten bzw. Verkehrsleitsysteme an Autobahnen, für Windkraftanlagen oder für Bohrplattformen.
